# EUROPEAN PATENT SPECIFICATION

(11) **EP 0 550 074 B1**
(45) Date of publication and mention of the grant of the patent: **10.06.1998**
(21) Application number: 92122171.9
(22) Date of filing: 30.12.1992
(51) Int. Cl.: G11B 5/55

(54) **Magnetic head servo system with steppermotor for head positioning**
Servosystem für magnetischen Kopf mit Schrittmotor für Kopfpositionierung
Système d'asservissement de tête magnétique avec moteur pas à pas pour positionnement de la tête

(30) Priority: 31.12.1991 US 815167
(43) Date of publication of application: 07.07.1993
(73) Proprietor: TANDBERG DATA ASA, 0411 Oslo (NO)
(72) Inventor: Guttorm, Rudi, NO1472 Fjellhamar (NO)
(74) Representative: Goddar, Heinz J., Dr.

(56) References cited:
- EP-A- 26 524
- DE-A- 3 242 334
- PATENT ABSTRACTS OF JAPAN vol. 8, no. 58 (P-261) 16 March 1984 & JP-A-58 205 925

## Description

### BACKGROUND OF THE INVENTION

It is necessary to position the write/read head or heads of a magnetic write/read unit very precisely relative to the closely-packed data tracks of the magnetic tape, to insure that data is written onto, or read from a desired, selected track. Since the data and racks run parallel to the length of the tape (i.e., parallel to the transport direction), the write/read head must be moved in both directions perpendicular to the transport direction.

A device for positioning a magnetic head relative to tracks of a magnetic tape in a magnetic tape write/read unit is described in German Published Patent Application No. 31 12 895.5, filed March 31, 1981 and corresponding to U.S. Patent No. 4,491,890.

In EP-A 0,026,524 a device with positioning systems which are provided with piezoelectric elements is described. A first positioning system consists of piezoelectric elements that extend substantially perpendicular to the surface of a magnetic tape, a second positioning system is supplied for pivoting the magnetic head about a pivotal axis. This document is used for the delimitation of appended claims 1 and 8.

From U.S. Patent No. 4,606,959 an arrangement is known, by which the positioning of a magnetic head occurs by the employment of a worm drive and a screw drive connected to a drive motor which can be a DC motor or stepping motor.

In U.S. Patent No. 4,609,959 a magnetic head disposed on a magnetic head carrier is positionable by means of a worm drive means and a screw drive means wherein the worm drive is formed of a worm spindle gear driven by a drive motor and associated with a worm wheel gear, and the screw drive is formed by an inside thread of the worm wheel and an associated outside thread on a shaft. The shaft is mounted in a fixed manner to the housing frame of the tape recorder. The magnetic head carrier is arranged so as to be displaceably disposed on the shaft and non-positively connected to the worm wheel, thus securing the magnetic head carrier against rotation during the rotation of the worm wheel but allowing the head carrier to follow the axial motion of the worm wheel.

Piezoelectric actuators are known for translating a shaft along a piezoelectric motor. Piezoelectric materials have the property that when an electric potential is applied to them, they undergo a physical deformation. Piezoelectric materials can be crystals or ceramics. The piezoelectric materials can be formed into a wide variety of shapes and sizes. Once subjected to an electrical potential of a defined polarity, the piezoelectric element undergoes a dimensional change.

A piezoelectric motor arrangement is commercially available from Burleigh Instruments, Inc., known as an "inchworm" motor, wherein three piezoelectric actuators are utilized in synchrony to incrementally move the shaft along the motor. Upper and lower (or left and right) piezoelectric elements act as clamps and are arranged on either side of a central piezoelectric element which acts as an extender. By clamping one of the piezoelectric clamps, and extending the piezoelectric extender, the opposite clamp (in unclamped condition) is progressed with respect to the shaft. By then clamping this opposite clamp and releasing the first clamp and thereafter shrinking the extender, the first clamp progresses along the shaft in the same direction that the opposite clamp had progressed previously. The process can thereafter be repeated to incrementally creep or inchworm the shaft along the motor.

In the known Burleigh inchworm motor the piezoelectric actuator is fixedly mounted and the stepping or creeping along the shaft actually moves the shaft with respect to the mounting rather than translate the piezoelectric elements with respect to a fixed shaft.

Piezoelectric actuators and such "inchworm motors" have heretofore not been employed in seeking to solve the problem of positioning a magnetic head relative to tracks on a magnetic tape in a magnetic tape write/read unit.

### SUMMARY OF THE INVENTION

It is an object of the present invention to provide a device for positioning a magnetic head relative to various tracks of a magnetic tape in a magnetic recording or reading device which exhibits a particularly low overall height or profile while still providing an extremely accurate positioning of the magnetic head without the drawbacks of a rotational drive system using gears and motors.

In accordance with the principles of the present invention, the above object is achieve in an arrangement of three actuators, used to progress a magnetic head across a magnetic tape in a direction perpendicular to the tape transport direction, selectively to read or write various tracks of the tape. The three actuators can preferably be of the piezoelectric type. The first of the three actuators is formed as a clamp surrounding a shaft, the shaft arranged parallel with a width of the tape that is to be read or written on. The second of the actuators also surrounds the shaft below the first actuator. The third actuator is arranged between the first and second actuator and functions mechanically to spread the first and second actuators from each other along the shaft, or to retract the first and second actuator toward each other on the shaft. By fixing one of the first and second actuators and expanding or retracting the third actuator and then fixing the second actuator with respect to the shaft and releasing the first actuator, and repeating these steps, the assembly can be progressed or "inchwormed" upwardly or downwardly along the shaft. By mounting a magnetic head carrier to either the first or second actuator a magnetic head can therefore be carried up and down along the shaft with the arrangement.

Alternately, especially for use in closed loop track servo applications, the lower actuator element can remain clamped with the upper actuator element remaining unclamped. In this application, the head carrier is mounted to the upper actuator element. By actuating the third actuator element, such as when the third actuator element is a piezoelectric element and selective voltages are applied thereto, the first actuator element and thus the head can now move quickly up and down continuously with the expanding or contracting third actuator element and the head can follow a prerecorded servo track on the tape.

By using the aforementioned described arrangement of three actuators such as piezoelectric actuators, an improved positioning arrangement can be achieved. The arrangement comprises fewer parts and is simply manufactured. Step motors and gears, and the problems associated therewith, are eliminated. The arrangement is suitable for coarse movement and at the same time can also be used for fine servo movement.

The system provides excellent azimuth/zenith stability control. The system provides very good control of the clearance between the shaft and the bearings such as the piezo clamping elements. Azimuth/zenith stability control is a problem with low profile systems because of the reduced distance between upper and lower bearings.

The aforementioned system provides for a low profile product requiring small space.

Unlike many mechanical systems, the actuator system, especially using piezoelectric elements, provides for a long life with very little wear. With piezoelectric elements, the conversion of the electrical energy applied thereto into mechanical motion occurs without a generation of any significant magnetic field. With regard to piezoelectrics, these materials can be operated for millions of cycles without wear or deterioration.

With regard to the piezoelectric application, resolution can be very fine and accurate in the nanometer range if needed. Therefore, utilizing piezoelectrics at the actuators for this arrangement provides sufficient accuracy anticipating products far into the future.

### BRIEF DESCRIPTION OF THE DRAWINGS

Figure 1 is a plan view of a servo system of the present invention applied to a magnetic tape read/write apparatus with a portion of a cover removed for clarity;
Figure 2 is a sectional view of the apparatus of Figure 1 taken generally along line II-II;
Figures 3A-3C are partial views taken from Figure 2 demonstrating progressively the operation of the servo apparatus;
Figure 4 is a voltage/time graph showing the synchronized applied voltages over time of the three piezo actuators of the present invention; and
Figure 5 is an alternate embodiment of the present invention.

### DETAILED DESCRIPTION OF THE PREFERRED EMBODIMENTS

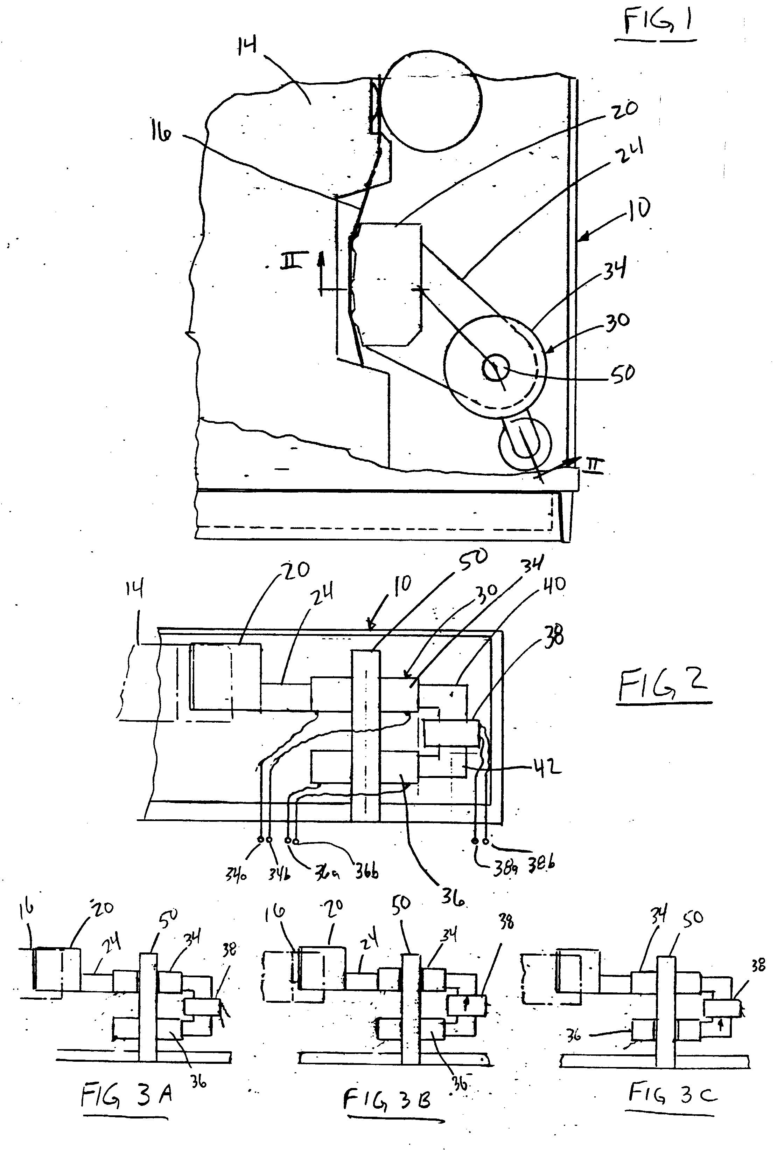

Figure 1 shows a magnetic write/read apparatus generally at 10 which receives thereinto a tape cartridge 14 which holds a magnetic tape 16 spooled therein as is known. The recording device 10 further provides a magnetic head 20 which fronts the magnetic tape 16 to either read or write information from or onto the tape 16. The magnetic head 20 is mounted on a head carrier 24. A servo system is shown generally at 30 comprising a first element or actuator 34, a second element or actuator 36, and a third element or actuator 38. The third actuator 38 is mounted to the first actuator 30 via a first arm 40; and the third actuator 38 is mounted to the second actuator 36 via a second arm 42. In a preferred embodiment, the first actuator 30, the second actuator 36 and the third actuator 38 can comprise piezoelectric elements. However, any or all of these elements could be plunger-type solenoids or other devices which can be electrically activated to perform the below described tasks.

The first and second actuators 34, 36 are mounted axially onto a shaft 50. The first and second actuators are selectively movable along the shaft 50. The first element 34 is preferably a piezoelectric disk having electric leads 34a, 34b. When a voltage of selected polarity and magnitude is applied across these leads, the piezo disk 34 constricts at its center aperture to clamp the shaft 50. The second element 36 is also preferably a piezoelectric disk and has electric leads 36a, 36b. When a voltage of selected polarity and magnitude is applied across these leads, the second piezo disk 36 constricts at its aperture to clamp the shaft 50.

The third element 38 is preferably a piezo element and has electric leads 38a, 38b and when a voltage of selected polarity and magnitude is applied thereto the third piezo element 38 expands in a vertical direction with respect to Figure 2 to separate further the first element 34 from the second element 36.

Figures 3A-3C show how this servo arrangement 30 can be used to translate the head 20 vertically with respect to the tape 16. Figure 3A shows the first element 34 in a released condition with regard to the shaft 50 and the second element 36 in a clamped condition with regard to the shaft 50. In Figure 3B the third element 38 has a voltage applied to it and has expanded to translate the first element 34 upwardly with respect to the second element 36. Because the second element 36 is fixed by clamping with respect to the shaft 50, the first element 34 has translated upwardly with respect to the shaft thus carrying the head carrier 24 and the head 20 upwardly with it. Figure 3C shows the further step of now applying the voltage to the first element 34 to thus clamp the first element 34 to the shaft 50, the second element 36 has been released from the shaft 50 by removing the voltage potential from the second element 36. By removing the potential from the third element 38, the third element 38 has contracted and by so doing has lifted the second element 36 upwardly with respect to the first element 34, and because the first element 34 is clamped with respect to the shaft 50, the second element 36 has been translated upwardly with respect to the shaft 50.

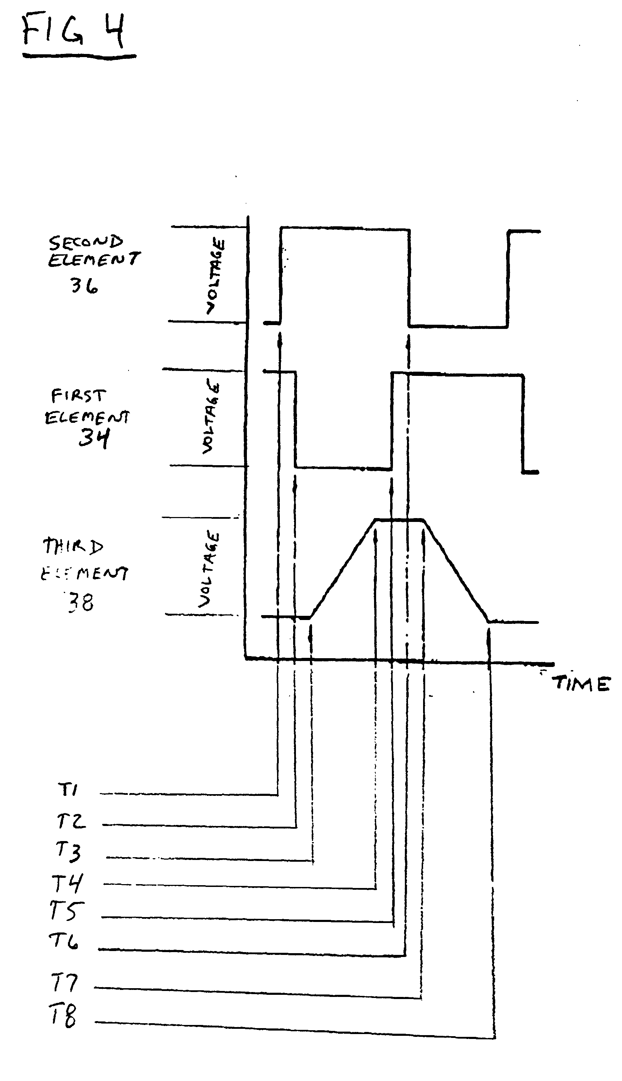

Figure 4 shows in graphical representation, with voltage as the ordinate and time as the abscissa, the synchronized applied voltages to the three elements 34, 36 and 38 to effect the "inchworm" translation of the servo system 30 up and down with respect to the shaft 50. One cycle is displayed, but it is readily apparent that the cycle can be multiplied and/or reversed.

At time T1 the second element has a voltage applied to it and thus clamps the shaft. At time T2 the first element is released from its clamping voltage. Between time T3 and time T4 a voltage is applied in increasing fashion to the third element 38 to expand the third element in length. At time T5 the first element has a voltage applied to it to clamp the first element to the shaft. Between time T4 and T7 a constant voltage is applied to the third element 38. At time T5 a voltage is applied to the first element 34 to clamp the first element 34 to the shaft. At time T6 the voltage is removed from the second element 36 to release its clamping action on the shaft 50. Between time T7 and T8 the voltage is ramped down from the third element 38 to contract the third element 38. Thus, at this point the first element is clamped to the shaft and the third element 38 has shrunk lifting the second element 36 upwardly with it. The cycle can be repeated to affect this inchworm climbing of the servo system 30.

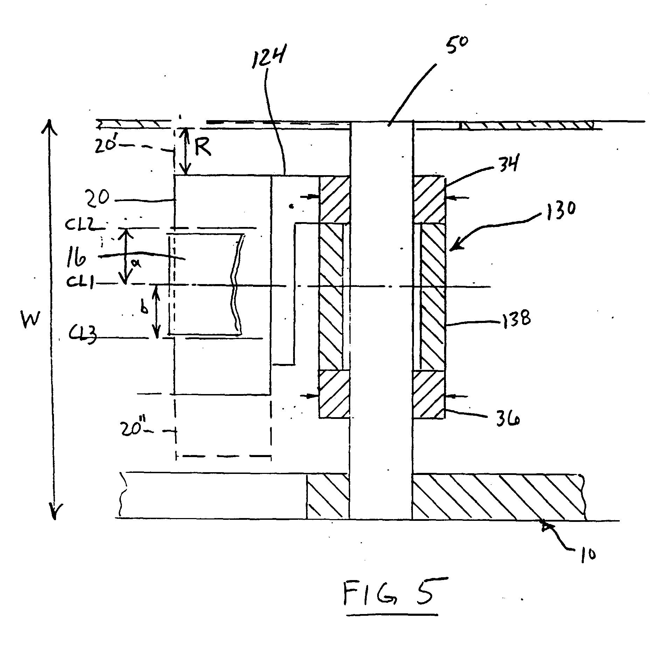

Figure 5 shows an alternate embodiment of the structure of Figure 2, wherein the third element 38 is replaced by an alternate third element 138 which is located axially between the first and second elements 34, 36. Thus, the first arm 40 and the second arm 42 are deleted as the third element 138 expands or contracts to directly translate the unclamped respective one of the first element 34 and the second element 36. The head carrier 24 has been replaced with an alternately configured head carrier 124. In this embodiment, the first element 34, the second element 36, and the third element 138 behave in similar synchronous fashion to that described in Figures 3A-3C and Figure 4.

Alternately, for rapid minute positioning of the head 20 with respect to the tape 16, the second element 36 can remain clamped and the positioning of the head 20 up and down can be achieved solely through the expansion and contraction of the third element 138. The range R would thus be limited to the maximum expansion or contraction ot the third element 138 depending on the voltage applied thereto. In an embodiment for one-inch format drives, wherein a profile height W is 25.4 mm, the range R would be 0-10µm. This is particularly useful in a closed loop track servo wherein the head must move quickly up and down continuously, so that the head can follow a prerecorded servo track on the tape. The disclosed system, however, can be used to advantage in any size drive format.

The center line of the tape 16 is indicated as CL1. Figure 5 shows in dashed lines the upper translated position of the head 20 indicated as 20'. In this position the center line of the head 20 is located at CL2. The range difference a between CL1 and CL2 is 3.5 mm in the preferred embodiment. Also shown in dashed lines is the lowest range position of the head 20 indicated as 20". The center line of the head 20 at this lowest position is indicated as CL3. The range difference b between CL1 and CL3 is also 3.5 mm.

In any one cycle of extension by the third element 138, the unclamped element, either element 34 or element 36 can move up approximately 10µm in the expected embodiment.

## Claims

1. A read/write apparatus (10) containing a device for positioning a magnetic head (20) relative to a selected one of a plurality of tracks of a magnetic tape (20), said tracks extending parallel to a tape transport direction in said device, comprising:
a magnetic tape recorder housing frame;
a position actuator (38, 138);
a magnetic head carrier (24, 124) mounted to said position actuator;
a magnetic head (20) secured to said magnetic head carrier (24, 124) ;
characterized in that
said magnetic tape recorder housing frame comprises a shaft (50) and means for mounting the shaft in a fixed manner perpendicular to said tape transport direction;
said position actuator (38, 138) comprises an element having a portion thereof which can be altered in length between a first end and a second end thereof perpendicular to said tape transport direction by electrical stimulation thereof;
said portion of said position actuator (38, 138) is connected at said first end to a first clamp actuator (34) and connected at said second end to a second clamp actuator (36);
said magnetic head carrier (24, 124) is mounted to said first clamp actuator (34);
said portion of said position actuator (38, 138) is electrically stimulatable to selectively extend or retract said magnetic head carrier (24, 124) in a direction perpendicular to said tape transport direction.

2. A device as defined in claim 1, characterized in that
said first clamp actuator (34) is at least partially surrounding said shaft (50) and slidable along said shaft (50) and electrically stimulatable to grip said shaft (50);
said second clamp actuator (36) is at least partially surrounding said shaft (50) and slidable along said shaft (50) and electrically stimulatable to grip said shaft (50) and spaced from said first clamp actuator (34);
and further characterized by
means for repeatedly alternatingly electrically stimulating said first and second clamp actuators (34, 36) for causing one of said clamp actuators to grip said shaft (50) while the other of the clamp actuator is free to slide along said shaft (50); and
means for repeatedly electrically stimulating said portion of said position actuator (38, 138), coordinated with the stimulation of said first and second clamp actuators (34, 36), for altering said length of said portion for advancing, in a selected direction, said clamp which is free to slide along said shaft (50) to progressively move said magnetic head (20) to a selected position.

3. A device as defined in claim 1 or 2, wherein said first clamp actuator (34) and said second clamp actuator (36) and said position actuator (38, 138) comprise piezoelectric elements.

4. A device as defined in claim 1 or 2, wherein said first clamp actuator (34) and said second clamp actuator (36) and said position actuator (38, 138) comprise plunger-type solenoid elements.

5. A device as defined in claims 1 to 4, wherein said first clamp actuator (34) and said second clamp actuator (36) are ring-shaped elements slidably mounted on said shaft (50).

6. A device as defined in claims 1 to 5, wherein said position actuator (38) comprises a first arm (40) connecting said first end of said portion to said first clamp actuator (34); and
a second arm (42) connecting said second end of said portion to said second clamp actuator (36).

7. A device as defined in claims 1 to 6, wherein said first clamp actuator (34), said second clamp actuator (36) and said position actuator (38) comprise cylindrical shapes, and are stacked axially on said shaft (50).

8. A method for positioning a magnetic head (20) relative to a select one of a plurality of tracks of magnetic tape (16) in a magnetic tape write/read device, said tracks extending parallel to a tape transport direction in said device, comprising the steps of:
providing a magnetic head (20) facing said magnetic tape (10) and mounted to a servo system (30)
characterized by
providing a shaft (50) arranged generally parallel to a width of the magnetic tape (16) to be read, said servo system being slidable on said shaft;
providing the servo system with a clamping and extending mechanism, said extending mechanism being stimulatable to alter in length; and
sequentially actuating said clamping and extending mechanism to move said servo system and said magnetic head progressively along said shaft in a selected direction.

9. The method according to claim 8, characterized in that
said clamping and extending mechanism comprises a first clamp actuator (34) mounted slidably on said shaft; a second clamp actuator (36) mounted slidably on said shaft and spaced from said first clamp actuator; a position actuator (38) having a portion thereof which can be expanded or contracted in length, said portion connected at a first end of said first clamp actuator (34) and connected to a second edge of said second clamp actuator (36); said first clamp actuator (34) and said second clamp actuator (36) being selectively electrically stimulatable to grip said shaft (50) to prevent axial movement of the respective clamp actuator with respect to said shaft (50); said portion of said position actuator (38) electrically stimulatable to selectively extend retract from said first clamp actuator (34) with respect to said second clamp actuator (36); wherein said sequentially actuating comprises the steps of:
stimulating said second clamp actuator (36) to clamp said shaft (50);
stimulating said position actuator (38) to extend said portion;
stimulating said first clamp actuator (34) to grip the shaft (50) ;
destimulating said second clamp actuator (36) to release said second clamp actuator (36) from said shaft (50);
destimulating said position actuator (38) to retract said portion; and
repeating these latter five steps, as a cycle, a selective number of times.

## Patentansprüche

1. Lese/Schreibapparat (10), der eine Vorrichtung zum Positionieren eines Magnetkopfes (20) relativ zu einer ausgewählten von einer Vielzahl von Spuren auf einem Magnetband (20) enthält, wobei sich die Spuren parallel zur Richtung des Bandtransportes in der Vorrichtung erstrecken, der umfaßt:
einen Gehäuserahmen für den Magnetbandrekorder;
einen Positionsstellantrieb (38, 138);
einen Magnetkopf träger (24, 124), der an dem Positionsstellantrieb befestigt ist;
einen Magnetkopf (20), der an dem Magnetkopfträger (24, 124) befestigt ist ;
dadurch gekennzeichnet, daß
der Gehäuserahmen des Magnetbandrekorders einen Schaft (50) und eine Vorrichtung zum festen Halten des Schaftes senkrecht zur Richtung des Bandtransportes umfaßt;
der Positionsstellantrieb (38, 138) ein Element umfaßt, von dem ein Teil durch elektrische Erregung zwischen einem ersten Ende und einem zweiten Ende senkrecht zur Richtung des Bandtransportes in der Länge verändert werden kann;
der Teil des Positionsstellantriebes (38, 138) an dem ersten Ende mit einem ersten Klemmsteller (34) und an dem zweiten Ende mit einem zweiten Klemmsteller (36) verbunden ist;
der Magnetkopfträger (24, 124) an dem ersten Klemmsteller (34) befestigt ist;
der Teil des Positionsstellantriebes (38, 138) elektrisch erregbar ist, um den Magnetkopfträger (24, 124) in einer Richtung senkrecht zur Richtung des Bandtransportes selektiv vorzuschieben oder zurückzuziehen.

2. Vorrichtung nach Anspruch 1, dadurch gekennzeichnet, daß
der erste Klemmsteller (34) zumindest teilweise den Schaft (50) umgreift und entlang dieses Schaftes (50) beweglich ist und elektrisch erregbar ist, den Schaft (50) zu greifen;
der zweite Klemmsteller (36) zumindest teilweise den Schaft (50) umgreift und entlang des Schaftes (50) beweglich ist und elektrisch erregbar ist, diesen Schaft (50) zu greifen, und sich in einem Abstand vom ersten Klemmsteller (34) befindet;
und weiterhin gekennzeichnet durch
eine Vorrichtung zur wiederholten abwechselnden elektrischen Erregung des ersten und zweiten Klemmstellers (34, 36), um einen der Klemmsteller zum Greifen des Schaftes (50) zu bringen, während der andere der Klemmsteller entlang des Schaftes (50) frei gleiten kann; und
eine Vorrichtung zur wiederholten elektrischen Erregung dieses Teils des Positionsstellantriebes (38, 138), koordiniert mit der Erregung des ersten und zweiten Klemmstellers (34, 36), zur Veränderung der Länge dieses Teils, um die Klemme, die frei am Schaft entlang gleiten kann, in eine ausgewählte Richtung zu bewegen, um schrittweise den Magnetkopf (20) in eine ausgewählte Position zu bringen.

3. Vorrichtung nach Anspruch 1 oder 2, bei der der erste Klemmsteller (34) und der zweite Klemmsteller (36) und der Positionsstellantrieb (38, 138) piezoelektrische Bauteile aufweisen.

4. Vorrichtung nach Anspruch 1 oder 2, bei der der erste Klemmsteller (34) und der zweite Klemmsteller (36) und der Positionsstellantrieb (38, 138) tauchspulenähnliche Bauteile aufweisen.

5. Vorrichtung nach einem der Ansprüche 1 bis 4, bei der der erste Klemmsteller (34) und der zweite Klemmsteller (36) ringförmige Elemente sind, die beweglich auf dem Schaft (50) angebracht sind.

6. Vorrichtung nach einem der Ansprüche 1 bis 5, bei der der Positionsstellantrieb (38) einen ersten Arm (40), der das erste Ende dieses Teils mit dem ersten Klemmsteller (34) verbindet; und
einen zweiten Arm (42), der das zweite Ende des zweiten Teiles mit einem zweiten Klemmsteller (36) verbindet, umfaßt.

7. Vorrichtung nach einem der Ansprüche 1 bis 6, bei der der erste Klemmsteller (34), der zweite Klemmsteller (36) und der Positionsstellantrieb (38) zylindrische Formen haben und axial auf dem Schaft (50) gestapelt sind.

8. Verfahren zur Positionierung eines Magnetkopfes (20) relativ zu einer ausgewählten von einer Vielzahl von Spuren auf einem Magnetband (16) in einer Magnetbandschreib-/lesevorrichtung, wobei sich die Spuren parallel zu einer Bandtransportrichtung in der Vorrichtung erstrecken, das die Schritte umfaßt:
einen Magnetkopf (20), der gegenüber dem Magnetband (10) auf einem Servosystem (30) befestigt ist, zur Verfügung zu stellen,
gekennzeichnet durch
die Bereitstellung eines Schaftes (50) im allgemeinen parallel zur Breite des zu lesenden Magnetbandes (16) angebracht, wobei das Servosystem auf dem Schaft beweglich ist;
die Ausrüstung des Servosystems mit einem Klemm- und Verschiebemechanismus, wobei der Verschiebemechanismus zur Längenänderung erregbar ist; und
der Reihe nach den Klemm- und Verschiebemechanismus auszulösen, um das Servosystem und den Magnetkopf schrittweise längs des Schaftes in eine ausgewählte Richtung zu bewegen.

9. Verfahren nach Anspruch 8, dadurch gekennzeichnet, daß
der Klemm- und Verschiebemechanismus einen ersten Klemmsteller (34), der beweglich auf dem Schaft angebracht ist; einen zweiten Klemmsteller (36), der beweglich auf dem Schaft und in einem Abstand zum ersten Klemmsteller angebracht ist; einen Positionsstellantrieb (38), von dem ein Teil in seiner Länge auseinandergeschoben oder zusammengezogen werden kann, wobei dieser Teil an einem ersten Ende des ersten Klemmstellers (34) und an einem zweiten Ende des zweiten Klemmstellers (36) befestigt ist; wobei der erste Klemmsteller (34) und der zweite Klemmsteller (36) selektiv elektrisch erregbar sind, um den Schaft (50) zu greifen, um eine axiale Bewegung des jeweiligen Klemmstellers relativ zu dem Schaft (50) zu verhindern; wobei der Teil des Positionsstellantriebs (38) elektrisch erregbar ist, um sich selektiv von dem ersten Klemmsteller (34) relativ zu dem zweiten Klemmsteller (36) vorzuschieben/ zurückzuziehen, enthält; wobei die aufeinanderfolgende Betätigung die Schritte umfaßt:
Erregung des zweiten Klemmstellers (36), um den Schaft (50) zu greifen;
Erregung des Positionsstellantriebes (38), um den Teil vorzuschieben;
Erregung des ersten Klemmstellers (34), um den Schaft (50) zu greifen;
Entspannung des zweiten Klemmstellers (36), um den zweiten Klemmsteller (36) von dem Schaft (50) zu lösen;
Entspannung des Positionsstellantriebs (38), um den Teil zurückzuziehen; und
Wiederholen dieser letzteren fünf Schritte als Zyklus so oft wie ausgewählt.

## Revendications

1. Appareil de lecture/écriture (10) comportant un dispositif pour positionner une tête magnétique (20) par rapport à une piste sélectionnée parmi plusieurs pistes d'une bande magnétique (20), lesdites pistes s'étendant parallèlement à une direction de transport de bande dans ledit dispositif, comportant :
un châssis de dispositif d'enregistrement de bande magnétique ;
un actionneur de position (38, 138) ;
un support de tête magnétique (24, 124) monté sur ledit actionneur de position ;
une tête magnétique (20) fixée sur ledit support de tête magnétique (24, 124) ;
caractérisé en ce que
ledit châssis de dispositif d'enregistrement de bande magnétique comporte un arbre (50) et des moyens pour monter l'arbre d'une manière fixe perpendiculairement à ladite direction de transport de bande ;
ledit actionneur de position (38, 138) comporte un élément ayant une partie de celui-ci qui peut varier en longueur entre une première extrémité et une seconde extrémité de celui-ci perpendiculairement à ladite direction de transport de bande par une stimulation électrique de celui-ci ;
ladite partie dudit actionneur de position (38, 138) est reliée au niveau de ladite première extrémité à un premier actionneur de serrage (34) et reliée au niveau de ladite seconde extrémité à un second actionneur de serrage (36) ;
ledit support de tête magnétique (24, 124) est monté sur ledit premier actionneur de serrage (34) ;
ladite partie dudit actionneur de position (38, 138) peut être stimulée de manière électrique pour dilater ou rétracter de manière sélective ledit support de tête magnétique (24, 124) dans une direction perpendiculaire à ladite direction de transport de bande.

2. Dispositif selon la revendication 1, caractérisé en ce que
ledit premier actionneur de serrage (34) entoure au moins partiellement ledit arbre (50) et peut coulisser le long dudit arbre (50) et peut être stimulé électriquement pour saisir ledit arbre (50) ;
ledit second actionneur de serrage (36) entoure au moins partiellement ledit arbre (50) et peut coulisser le long dudit arbre(50) et peut être stimulé électriquement pour saisir ledit arbre (50) et est espacé dudit premier actionneur de serrage (34) ;
et caractérisé de plus en ce qu'il comporte
des moyens pour stimuler électriquement de manière alternée et répétée lesdits premier et second actionneurs de serrage (34, 36) pour entraîner un desdits actionneurs de serrage à saisir ledit arbre (50) alors que l'autre actionneur de serrage est libre de coulisser le long dudit arbre (50) ; et
des moyens pour stimuler électriquement de manière répétée ladite partie dudit actionneur de position (38, 138), en coordination avec la stimulation des premier et second actionneurs de serrage (34, 36), pour faire varier ladite longueur de ladite partie pour faire avancer, dans une direction sélectionnée, ledit actionneur de serrage qui est libre de coulisser le long dudit arbre (50) pour déplacer progressivement ladite tête magnétique (20) vers une position sélectionnée.

3. Dispositif selon la revendication 1 ou 2, dans lequel ledit premier actionneur de serrage (34) et ledit second actionneur de serrage (36) et ledit actionneur de position (38, 138) comportent des éléments piézoélectriques.

4. Dispositif selon la revendication 1 ou 2, dans lequel ledit premier actionneur de serrage (34) et ledit second actionneur de serrage (36) et ledit actionneur de position (38, 138) comportent des éléments formant électroaimant du type à piston.

5. Dispositif selon les revendications 1 à 4, dans lequel ledit premier actionneur de serrage (34) et ledit second actionneur de serrage (36) sont des éléments en forme d'anneau montés de manière coulissante sur ledit arbre (50).

6. Dispositif selon les revendications 1 à 5, dans lequel ledit actionneur de position (38) comporte un premier bras (40) reliant ladite première extrémité de ladite partie audit premier actionneur de serrage (34) ; et
un second bras (42) reliant ladite seconde extrémité de ladite partie audit second actionneur de serrage (36).

7. Dispositif selon les revendications 1 à 6, dans lequel le premier actionneur de serrage (34), ledit second actionneur de serrage (36) et ledit actionneur de position (38) ont une forme cylindrique, et sont empilés axialement sur ledit arbre (50).

8. Procédé de positionnement d'une tête magnétique (20) par rapport à une piste sélectionnée parmi plusieurs pistes d'une bande magnétique (16) située dans un dispositif d'écriture/lecture de bande magnétique, lesdites pistes s'étendant parallèlement à une direction de transport de bande dans ledit dispositif, comportant les étapes consistant à :
agencer une tête magnétique (20) en vis-à-vis de ladite bande magnétique (10) et la monter sur un système d'asservissement (30),
caractérisé par les étapes consistant à
agencer un arbre (50) de manière générale parallèlement à la largeur de la bande magnétique (16) à lire, ledit système d'asservissement pouvant coulisser sur ledit arbre ;
munir le système d'asservissement d'un mécanisme de serrage et de dilatation, ledit mécanisme de dilatation pouvant être stimulé pour varier en longueur ; et
actionner de manière séquentielle ledit mécanisme de serrage et de dilatation pour déplacer ledit système d'asservissement et ladite tête magnétique progressivement le long dudit arbre dans une direction sélectionnée.

9. Procédé selon la revendication 8, caractérisé en ce que ledit mécanisme de serrage et de dilatation comporte un premier actionneur de serrage (34) monté de manière coulissante sur ledit arbre ; un second actionneur de serrage (36) monté de manière coulissante sur ledit arbre et espacé dudit premier actionneur de serrage ; un actionneur de position (38) ayant une partie de celui-ci qui peut être dilatée ou contractée en longueur, ladite partie étant reliée à une première extrémité dudit premier actionneur de serrage (34) et étant reliée à un second bord dudit second actionneur de serrage (36) ; ledit premier actionneur de serrage (34) et ledit second actionneur de serrage (36) pouvant être stimulés électriquement de manière sélective pour saisir ledit arbre (50) pour empêcher un mouvement axial de l'actionneur de serrage respectif par rapport audit arbre (50) ; ladite partie dudit actionneur de position (38) pouvant être stimulée électriquement pour dilater ou rétracter de manière sélective ledit premier actionneur de serrage (34) par rapport audit second actionneur de serrage (36) ; dans lequel ledit actionnement séquentiel comporte les étapes consistant à :
stimuler ledit second actionneur de serrage (36) pour serrer ledit arbre (50) ;
stimuler ledit actionneur de position (38) pour dilater ladite partie ;
stimuler ledit premier actionneur de serrage (34) pour saisir l'arbre (50) ;
déstimuler ledit second actionneur de serrage (36) pour libérer ledit second actionneur de serrage (36) dudit arbre (50) ;
déstimuler ledit actionneur de position (38) pour rétracter ladite partie ; et
répéter ces cinq dernières étapes, en cycle, un nombre de fois sélectif.
